# EUROPÄISCHE PATENTANMELDUNG

(11) **EP 0 719 494 A1**
(43) Veröffentlichungstag der Anmeldung: **03.07.1996**
(21) Anmeldenummer: 95120712.5
(22) Anmeldetag: 29.12.1995
(51) Int. Cl.: A01C 15/00, A01M 7/00, B60P 3/30

(54) **Aufbaubarer Tank für Freisichtschlepper**

(30) Priorität: 01.01.1995 DE 19500007
(71) Anmelder: Wild, Helmut, D-78176 Blumberg (DE)
(72) Erfinder: Wild, Helmut, D-78176 Blumberg (DE)
(74) Vertreter: Patentanwälte Westphal, Buchner, Mussgnug Neunert, Göhring

(57) **Zusammenfassung**

Bisher war es nur möglich, bei Schleppern mit einer Fronthydraulik im Frontbereich Flüssigkeitstanks anzubauen. Bei Schleppern, die als Geräteträger oder Tracschlepper ausgestattet sind, kann im Front- oder Heckbereich ein Flüssigkeitstank aufgebaut werden. Solche Schlepper sind jedoch sehr teuer. Darum liegt der Erfindung die Aufgabe zugrunde, für die von den Schlepperherstellern neu entwickelten Freisichtschleppern einen Tank zu entwickeln. Gelöst wird die Aufgabe, indem der freie Raum über und gegebenenfalls neben oder vor der Motorhaube genutzt wird. Da die Freisichtschlepper wesentlich billiger als die oben genannten Schlepper sind, beruht der Hauptvorteil des Patentvorschlages in der Wirtschaftlichkeit. Der Flüssigkeitstank kann alleine oder in Kombination mit einer Heckanbauspritze zum Einsatz gebracht werden. Hinzu kommt die einfache und sinnvolle Anbaumöglichkeit mit dem Schlepperrahmen. Durch Lochschienen können vor der Vorderachse Stützräder zum An- und Abbau angebracht werden, dadurch ist ein schnelles An- und Abkoppeln vom Schlepper möglich.

## Beschreibung

Die Erfindung betrifft einen Flüssigkeitstank für Freisichtschlepper, die nach vorne eine abgeflachte Motorhaube besitzen, nach dem Oberbegriff des Patentanspruchs 1.

Auf landwirtschaftlichen Fahrzeugen aufbaubare Tanks im Frontaufbau für Pflanzenschutzmaßnahmen und Flüssigdüngung sind bekannt, siehe Beispiel DE-GM 75 31 582. Um eine höhere Schlagkraft bei Pflanzenschutzmaßnahmen und bei der Düngung mit Flüssigdünger zu haben, ist es notwendig, viel Flüssigkeit mit auf das Feld zu transportieren, um unnötige Leerfahrten zu vermeiden. Da jedoch aus Gründen der Gewichtsverlagerung die Behältergröße im Heckbereich des Schleppers begrenzt ist, sowie Anhängerspritzen sehr teuer sind, und der Einsatz bei kleinen und hängigen Flurstücken mit großen Schwierigkeiten verbunden ist, ist es sinnvoll, im Frontbereich des Schleppers einen Tank aufzubauen. Dieses war jedoch bisher im wesentlichen nur bei Systemschleppern oder Tragschleppern möglich, die wesentlich teuerer sind als normale Standardschlepper.

Es ist zwar möglich, bei Schleppern mit Fronthydraulik einen Tank an diese anzubauen, hierzu ist jedoch eine teure Fronthydraulik notwendig. Zudem ist der Tank von der Größe her begrenzt und verlängert durch den Anbaumechanismus der Fronthydraulik die Gesamtlänge des Schleppers.

Die durch die Schlepperhersteller neu entwickelten Freisichtschlepper (z. B. Deutz-Fahr-Schlepper o. MF-Schlepper) mit nach vorne abgeschrägter Motorhaube, bieten neue Möglichkeiten.

Der Erfindung liegt die Aufgabe zugrunde, für diese neuen Schlepperkonstruktionen einen gattungsgenmäßen Tank zu entwickeln zur Anwendung bei Pflanzenschutzmaßnahmen und Flüssigdüngung oder sonstigem Transport von Flüssigkeiten.

Diese Aufgabe wird durch die kennzeichnenden Merkmale des Patentanspruchs 1 gelöst.

Der hauptsächliche Vorteil dieses Tankes liegt in der Wirtschaftlichkeit, da es möglich ist, diesen auf Freisichtschleppern mit Schräghaube zu montieren, und deshalb kein teurer-Systemschlepper bzw. Geräteträger notwendig ist.

Der Tank kann auch in Kombination mit einer Heckanbauspritze mit oder ohne Flüssigkeitsbehälter zum Einsatz gebracht werden. Bei sonstigen Ackerbauarbeiten, z. B. Hacken oder Säen, kann an der Frontseite ein passender Spritzbalken mit der entsprechenden Spritztechnik angebracht werden.

Aus Designgründen fällt die Motorhaube bei Freisichtschleppern üblicherweise von der Unterkante der Frontscheibe gleichmäßig nach vorne ab. Jedoch gerade vor der Frontscheibe bzw. Kabine ist häufig noch Platz zwischen Motor und Motorhaube, so daß bei anderer Gestaltung der Motorhaube die Möglichkeit bestünde, noch mehr Raum über der Motorhaube zu bilden.

Im Bereich der Vorderräder kann der patentgemäße Flüssigkeitstank links und rechts eine Einkerbung besitzen, so daß beim Wenden die Reifen nicht mit dem Tank in Kollision geraten.

Der Tank kann am hinteren Teil, wo sich die Schlepperkabine befindet, so breit wie die Kabine selbst gestaltet werden.

Im folgenden wird ein Ausführungsbeispiel der Erfindung anhand der Zeichnung näher erläutert.

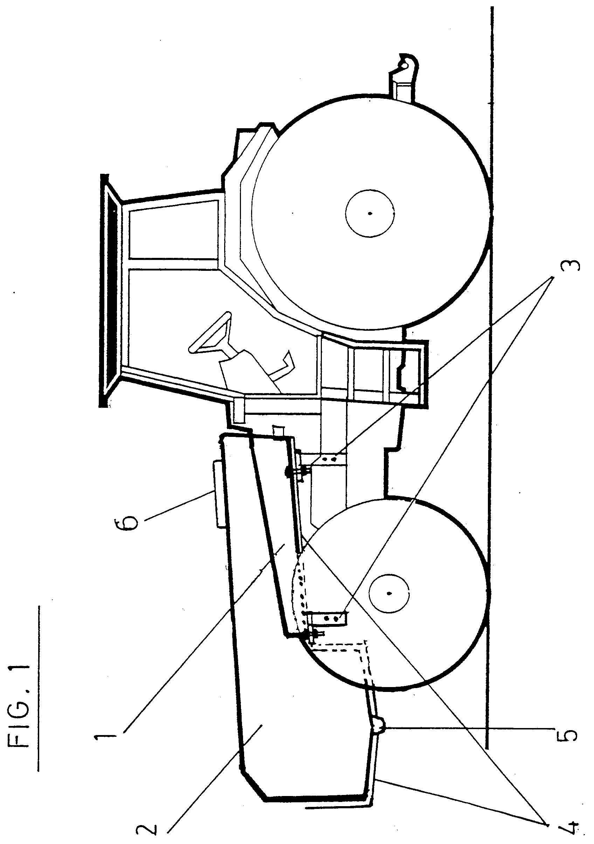

- Figur 1: zeigt den aufgebauten Tank in Seitenansicht.
1. Freisichtschlepper
2. Flüssigkeitstank
3. Befestigungseisen
4. Eisenprofil
5. Tankauslauf
6. Tankdeckel.

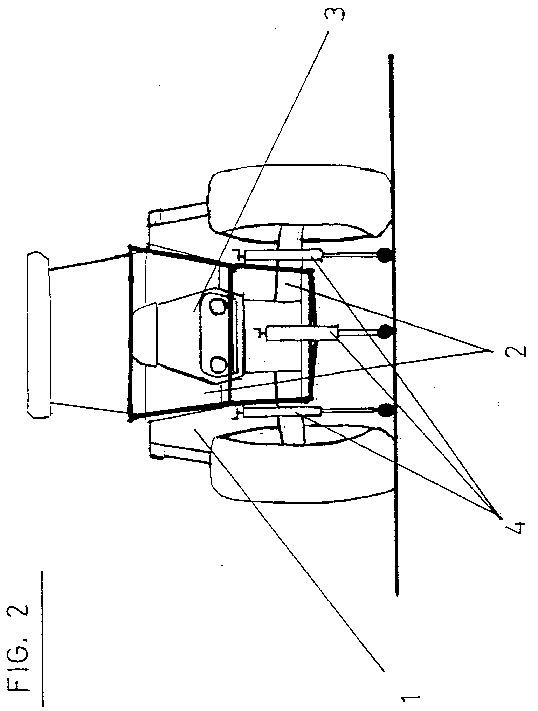

- Figur 2: zeigt den aufgebauten Tank von der Frontseite des Schleppers.
1. Freisichtschlepper
2. Flüssigkeitstank
3. Motorhaube
4. Stützräder.

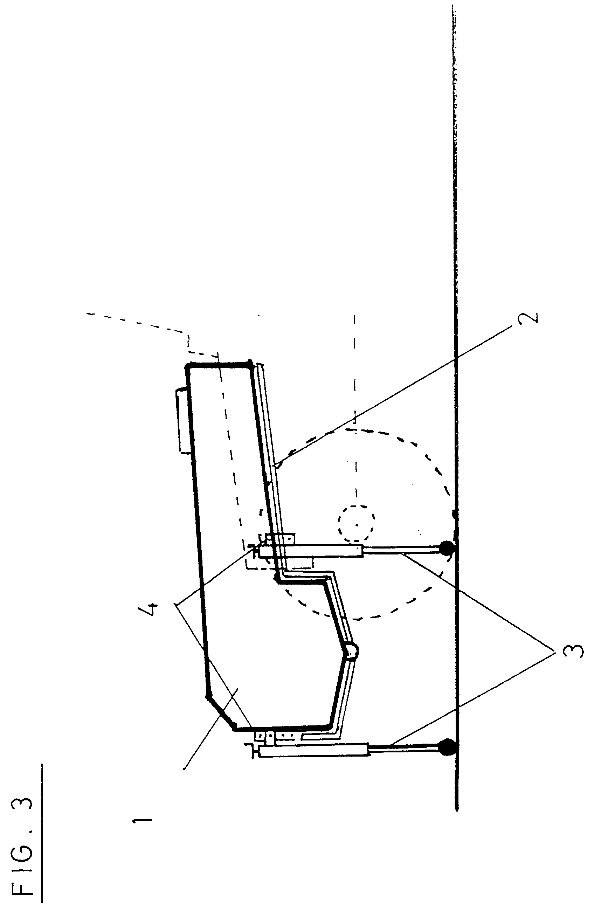

- Figur 3: zeigt den aufgebauten Tank in Seitenansicht.
1. Flüssigkeitstank
2. Eisenprofil
3. Stützräder
4. Lochschienen.

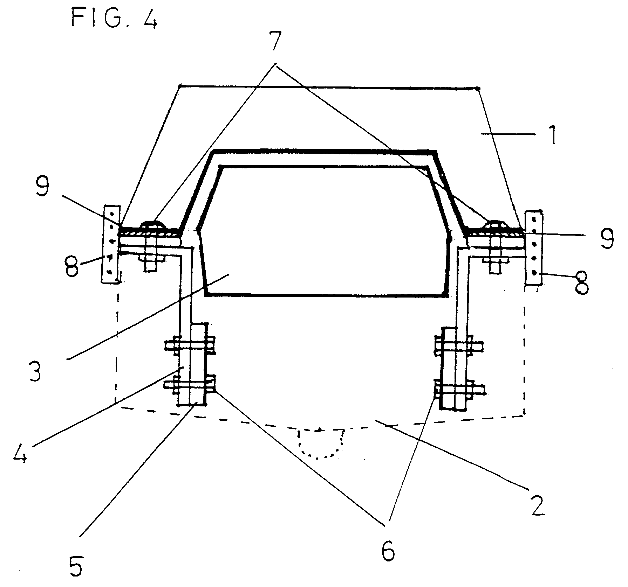

- Figur 4: zeigt den Querschnitt des aufgebauten Tankes in Frontansicht.
1. Flüssigkeitstank über der Motorhaube, der an der gesamten Unterseite verstärkt ist.
2. Flüssigkeitstank im Frontbereich des Schleppers.
3. Motorhaube
4. Befestigungseisen
5. Schlepperrahmen
6. Befestigungsschrauben-Verbindung zwischen Schlepperrahmen und Befestigungshalterung.
7. Befestigungsschrauben zwischen Flüssigkeitstank und Befestigungshalterung.
8. Lochschienen zur Befestigung der Stützräder
9. Gummiband.

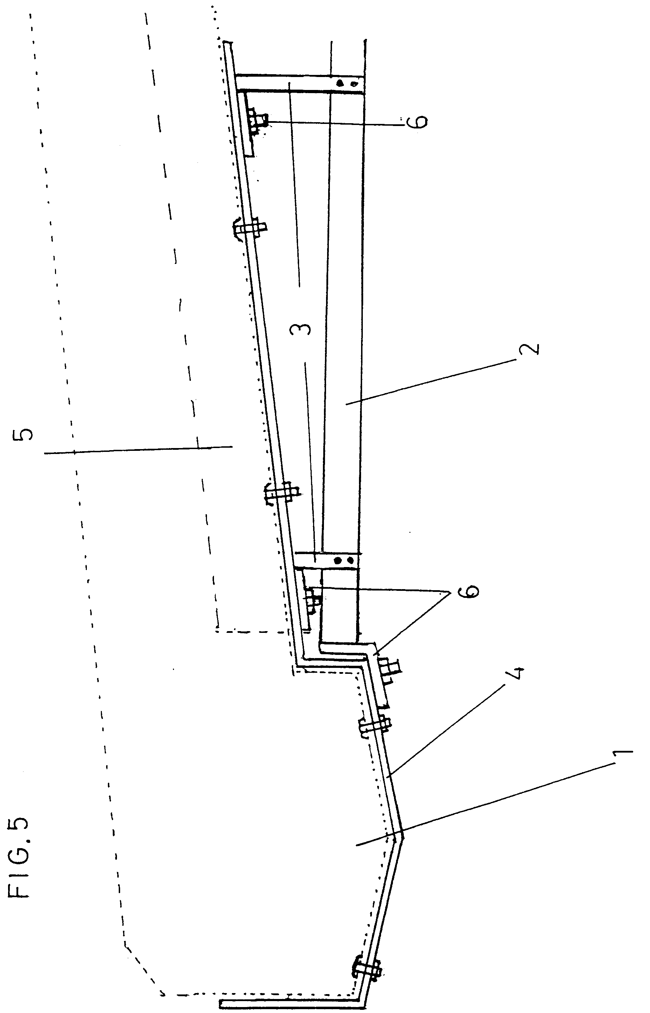

- Figur 5: zeigt die Seitenansicht der Befestigung des Tankes.
1. Flüssigkeitstank
2. Schlepperrahmen
3. Befestigungseisen
4. Eisenprofil
5. Schlepperhaube
6. Eisenlochplatte zur Befestigung des Tankes.

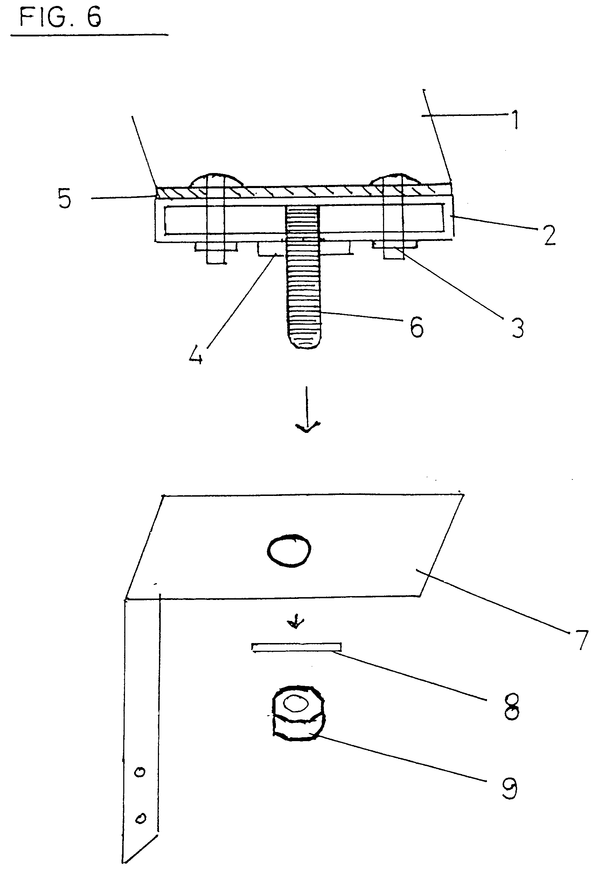

- Figur 6: zeigt die Schnellbefestigung des Tankes.
1. Flüssigkeitstank
2. Eisenprofil
3. Befestigungsschrauben zwischen Flüssigkeitstank und Eisenprofil.
4. Gummipuffer
5. Gummiband
6. Eingeschweißte Schraube
7. Lochplatte
8. Unterlagscheibe
9. Mutter.

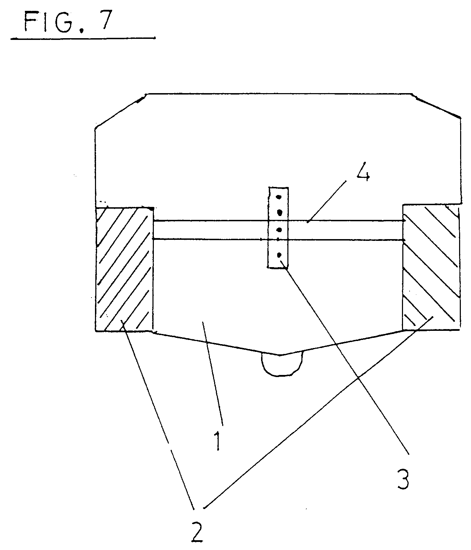

- Figur 7: zeigt den vorderen Teil des Tankes in Frontansicht.
1. Flüssigkeitstank
2. Eisenprofil
3. Lochschiene
4. Querverbindung zwischen den beiden Eisenprofilen.

Der Tank ist sehr leicht an- und abzubauen. Die Befestigung des Tankes ist sehr einfach und sinnvoll. Links und rechts des Tankes ist an seiner Unterkante ein vom hinteren bis zum vorderen Bereich laufenes Eisenprofil in Form des Tankes angebracht.

Der Tank ist mit dem Eisenprofil durch korrosionsfeste Schrauben und Gummidichtungen fest verbunden. Dieses Eisenprofil wiederum bildet die Verbindung zwischen dem Tank und dem Schlepperrahmen. In das Eisenprofil sind Schrauben eingeschweißt, die dann in die Bohrung der Flacheisen, die am Schlepper montiert sind, passen. Zwischen dem Eisenprofil und dem Flacheisen des Schleppers werden Gummipuffer eingesetzt, damit Stöße aufgefangen werden.

Im vorderen Teil der Tankmitte ist ein Stützrad montiert, zwei weitere befinden sich vor der Vorderachse des Schleppers. Die Stützräder werden durch Lochschienen bei der Straßenfahrt und den Spritzarbeiten nach oben gesteckt und beim Abhängen nach unten, oder ganz abmontiert.

Der Vorteil besteht hauptsächlich darin, daß die Abstützung vor der Vorderachse liegt.

Durch die höhenverstellbaren Stützräder mit Handkurbel, oder hydraulischen Stützen kann das Faß nach Lösen der Befestigung hochgehoben werden und der Schlepper kann zurückstoßen. Das Faß ist abgehängt. Das Anhängen erfolgt in umgekehrter Reihenfolge.

## Patentansprüche

1. Flüssigkeitstank für Düngung, Pflanzenschutz oder andere abzugebende Flüssigkeiten, zum Aufbau auf ein landwirtschaftliches oder sonstiges Fahrzeug mit abgeflachter Motorhaube (Freisichtschlepper), dadurch gekennzeichnet, daß zum Aufbau des Flüssigkeitstankes der freie Raum über, gegebenenfalls auch neben und/oder vor, der Motorhaube genutzt wird, ohne die Sicht nachteilig zu beeinträchtigen, indem der Flüssigkeitstank an die Form der Motorhaube angepaßt ist.

2. Flüssigkeitstank nach Anspruch 1, dadurch gekennzeichnet, daß der Flüssigkeitstank an der Unterseite, wo sich die Motorhaube befindet, eine sattelähnliche Einschnürung besitzt, wodurch er mehr Flüssigkeitsvolumen erhält.

3. Flüssigkeitstank nach Anspruch 1 oder 2, gekennzeichnet durch höhenverstellbare, an- und abbaubare Stützräder, die sich alle vor der Vorderachse befinden.

4. Flüssigkeitstank nach einem der Ansprüche 1 bis 3, gekennzeichnet durch Gefälle nach vorne und einen dort befindlichen tieferen Auslaufpunkt.

5. Flüssigkeitstank nach einem der Ansprüche 1 bis 4, dadurch gekennzeichnet, daß der Flüssigkeitstank mittels Anschlagelementen am Schlepper befestigt werden kann.

6. Flüssigkeitstank nach einem der Ansprüche 1 bis 5, dadurch gekennzeichnet, daß der Flüssigkeitstank im Bereich der Schlepperkabine wesentlich breiter gestaltet ist als im vorderen Bereich.
